## Europäisches Patentamt
## European Patent Office
## Office européen des brevets

(11) Publication number: **0 273 641**
**A2**

# EUROPEAN PATENT APPLICATION

(21) Application number: 87311065.4

(22) Date of filing: 16.12.87

(51) Int. Cl.4: **G05D 21/02** , G01N 21/33 , G01N 33/14

(30) Priority: 29.12.86 US 947318

(43) Date of publication of application:
06.07.88 Bulletin 88/27

(84) Designated Contracting States:
DE FR GB IT

(71) Applicant: **E.I. DU PONT DE NEMOURS AND COMPANY**
**1007 Market Street**
**Wilmington Delaware 19898(US)**

(72) Inventor: **Apple, Glenn D.**
**808 Rock Lane**
**Rockwood Court Delaware 19713(US)**
Inventor: **Saltzman, Robert S.**
**6 Sorrel Drive**
**Surrey Park Delaware 19803(US)**
Inventor: **Sennet, Stewart W.**
**36 Needleleaf Drive**
**Belltown Woods Delaware 19702(US)**

(74) Representative: **Blake, John Henry Francis et al**
**BROOKES AND MARTIN High Holborn House 52/54 High Holborn**
**London WC1V 6SE(GB)**

(54) Photometric analyzer and controller for beverages.

(57) For making carbonated beverages, water (3) and syrup (17) are metered into a mixer (4), the resulting mixture is carbonated (9), and then filled into containers in a filling line. Disclosed is the following:

a. removing a sample of beverage before the beverage is filled into containers and then passing the sample of beverage into a cell (14) of a photometric analyzer (13) and photometrically measuring the concentration of syrup in the sample which generates a signal;

b. feeding the signal to a process controller (12) which compares the signal to a signal generated by the photometric analyzer relating to an analysis of a sample of a standard beverage containing a predetermined level of syrup concentration, and precisely determining the deviation of syrup concentration of the sample from the standard;

c. adding a trim amount of water (11) to the beverage to control the syrup concentration of the beverage to the concentration level of the standard;

d. passing the beverage through a static-in-line mixer (27) to provide thorough mixing of the beverage.

Fig. 1

## PHOTOMETRIC ANALYZER AND CONTROLLER FOR BEVERAGES

### BACKGROUND OF THE INVENTION

This invention relates to an apparatus and process for analyzing and controlling the content of ingredients used in beverages.

In the preparation of carbonated beverages, a flavoring syrup is mixed with water and then the mixture is carbonated, usually chilled and then by using conventional filling equipment the resulting beverage is filled into containers such as bottles or cans. A critical component of the beverage is its syrup content. To provide a beverage that has a uniform taste and appearance, the syrup content must be held at a constant level. Also, significant quality improvement and/or cost savings can be realized if the correct syrup content is used.

The syrup content of the beverage can be monitored by analyzing the contents of a container after filling or removing a sample of beverage from the filling line and analyzing its syrup content and then if needed the ratio of syrup to water is adjusted to bring the syrup content of the beverage within a predetermine level. However, these methods are relatively slow and allow for a large number of containers to be filled before an adjustment of syrup content of the beverage can be made. An additional problem has presented itself with sugar-free beverages. In a conventional process, the syrup content of the beverage was determined by measuring the sugar content of the beverage which of course is not possible with a sugar-free beverage.

There is a need for a process and apparatus that will measure the syrup content of carbonated beverages in particular sugar-free beverages and make in line adjustments so that the syrup content of the beverage is adjusted to be within its desired level before it is filled into a container.

### SUMMARY OF THE INVENTION

An improved process and apparatus for making beverages in which water is mixed with a syrup (the resulting mixture may be carbonated) and filled into containers in a filling line, the improvement comprising:

a. removing a sample of beverage before the beverage is filled into containers and then passing the sample of beverage into a cell of a photometric analyzer and photometrically measuring the concentration of syrup in the sample which generates a signal;

b. feeding the signal to a process controller which compares the signal to a signal generated by the photometric analyzer of an analysis of a sample of a standard beverage containing a predetermined level of syrup concentration and precisely determining the deviation of syrup concentration of the sample from the standard;

c. adding a trim amount of water to the beverage to control the syrup concentration of the beverage to the concentration level of the standard;

d. passing the beverage through a (preferably static-in-line)mixer to provide thorough mixing of the beverage.

### BRIEF DESCRIPTION OF THE DRAWINGS

Fig.1 is a schematic diagram of a typical carbonated beverage mixing and filling process with the beverage analyzer and controller.

Fig.2 is a schematic diagram of the beverage analyzer and controller.

### DETAILED DESCRIPTION OF THE INVENTION

The improved process and apparatus of this invention make it possible to accurately control the syrup content of carbonated beverages. In particular, the syrup content of those carbonated beverages that use a sugar-free syrup can be precisely controlled which is very difficult or impossible with conventional equipment.

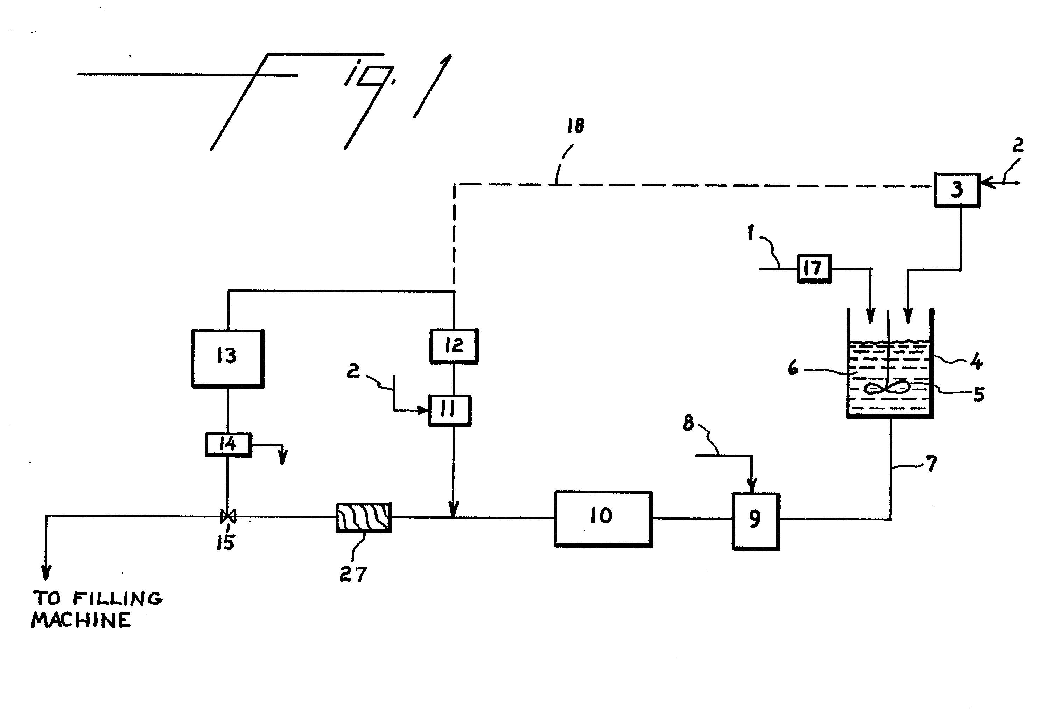

Fig.1 shows a typical beverage mixing and filling line using the beverage analyzer and controller. Syrup is charged into a mixing vessel $\underline{4}$, typically a stainless steel vessel, containing a mixer $\underline{5}$. A metering pump or flow control valve $\underline{17}$ is used to charge the desired amount of syrup $\underline{1}$ into the mixing vessel. Water $\underline{2}$ is charged into the mixing vessel via a metering pump or a flow control valve $\underline{3}$ which can be set and adjusted manually to provide the desired flow. Optionally, the water charged into the mixing vessel can be controlled by the process controller $\underline{12}$, for example, a PLC, programmable logic controller, made by Moore Products Inc. Springhouse,PA. The water and syrup are mixed to form a beverage $\underline{6}$ and the beverage is passed through stainless steel pipe $\underline{7}$ into the carbonator $\underline{9}$ where $CO_2$ $\underline{8}$ is added to the beverage. The level of carbonation of the beverage is controlled by the pressure of $CO_2$ used which typically is in the range of about 40-70 psig (pounds per square inch gauge). The beverage is then passed into a chiller unit $\underline{10}$ which reduces

the temperature of the beverage to about 2-4°C. The beverage then is passed into a static-in-line mixer 27, for example, a Sata-Tube Motionless Type Mixer made by TAH Industries Inc.,Imlaystown, N.J. covered by US Patent 4,093,188 to insure that the beverage is thoroughly mixed before it is filled into containers via a standard filling machine which is not shown. Other conventional static-in-line mixers can be used than the aforementioned type.

A sample of beverage for analysis is removed from the line via valve 15, typically, a pneumatic operated ball valve, and if desired the sample can be reintroduced into the process after photometric analysis. The cell 14 is of stainless steel, has quartz windows or another material that transmits U.V. light, a 1 cm path length, uses gaskets of FDA approved EPDM rubber or another type rubber that can be easily sanitized. The cell is of a design that can easily be sanitized and flushed out with water and no portions thereof contain a dead volume of liquid.

The sample of beverage is measured by the photometric analyzer 13 described in US Patent 4,380,586 issued April 19, 1983 to R. S. Saltzman which is hereby incorporated by reference. The photometric analyzer photometrically measures the concentration of syrup in the beverage and generates a signal which is fed to the process controller 12 which compares the syrup concentration of the beverage to a predetermined level of syrup for the standard beverage and then adds a trim amount of water to the beverage so that the syrup concentration is at the desired level.

In a preferred process, the concentration of syrup in the beverage prepared in the mixing vessel is at a slightly higher level than the standard level and a trim amount of water 2 is added via water control valve 11 to bring the syrup concentration within the standard level. To insure the beverage is thoroughly mixed but with a minimum amount of lag before being sampled and analyzed, it is passed through a static-in-line mixer 17, described above. Static-in-line mixers are not used in conventional mixing and filling processes but are a key component in this invention.

In an optional feed back loop 18 water being added to the mixer can be increased or decreased via control valve 3 which is controlled by the process controller 12. Generally, precise control of the syrup is not a likely via this route since there is a significant lag time between the control adjustment and the analysis of a sample of beverage. The above described technique of adding a trim amount of water before the static-in-line mixer to bring the beverage within the desired level is preferred.

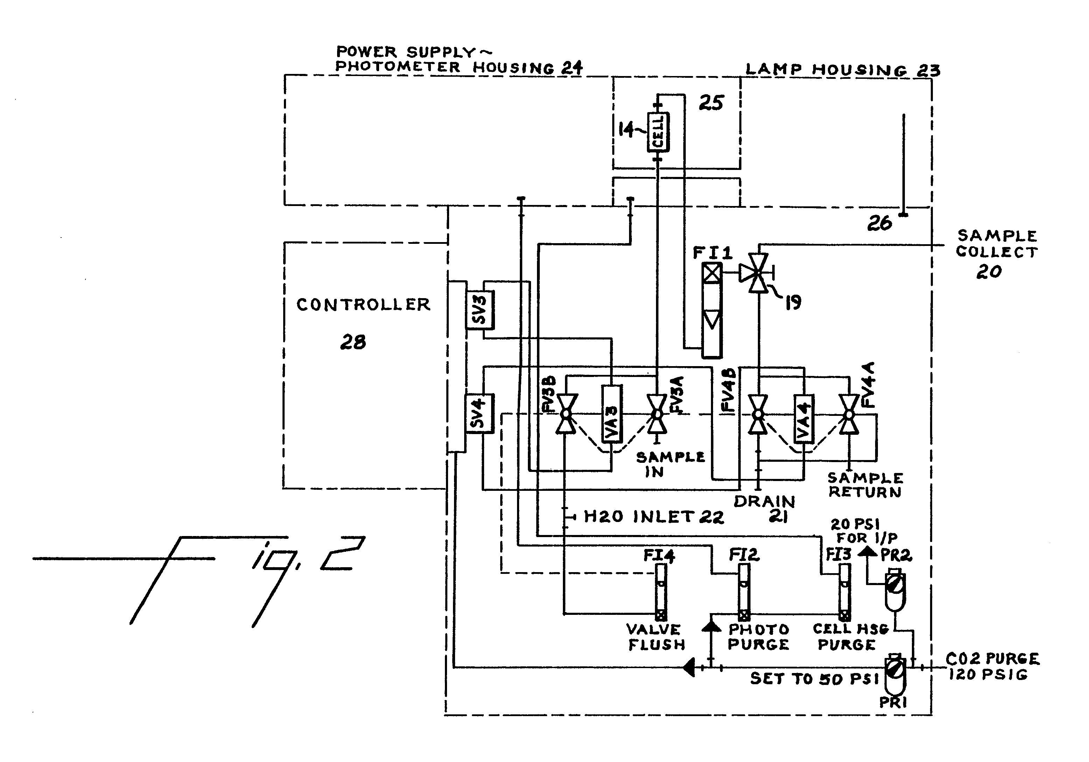

The photometric analyzer 13 and the cell 14 are housed together and the Valves are mounted together. Fig.2 shows a schematic diagram of above. A beverage sample is taken from the line through valve FV3A (shown as valve 15 in Fig.1) typically, a pneumatically actuated ball valve. The valve is actuated by valve actuator VA3 which is air or $CO_2$ powered. Preferably, $CO_2$ is used since it is clean and dry and readily available in the carbonation step of the process. The sample is passed into cell 14 and after analysis is passed into flow indicator FI1, typically, a rotameter having a range of 100-1600 ml/min. Then the sample is passed through three way valve 19. The sample can be collected via sample collect 20 and sent to a lab for further analysis or the sample can be sent to drain 21 via valve FV4B for disposal or returned to the process via valve FV4A. Both valves FV4A and FV4B are pneumatically actuated ball valves controlled by valve actuator VA4.

When the filling line is not in operation such as occurs when there is a change over of beverages, the cell 14 is flushed out with water. Water enters through an inlet 22 and enters the cell 14 through valve FV3B which is a pneumatically actuated ball valve actuated by valve actuator VA3. As discussed above, the water is passed through flow indicator FI1 and three way valve 19 and sent to drain.

Water is continuously flushed through modified ball valve body cavities (FV3A, FV3B,FV4Aand FV4B) to prevent contamination of the beverage. This is accomplished via flow indicator FI4, typically a combination valve assembly of a rotameter and ball valve.

As mentioned above, $CO_2$ is used to actuate the pneumatic valves and also is used to purge components 23, 24 and 25. The purge with dry $CO_2$ prevents condensation of moisture on the outside of windows of cell 14. $CO_2$ enters at a line pressure of 120 psig through pressure regulator PR1 and reduced to 50 psig. Pressure regulator PR1 controls $CO_2$ fed to solenoid valves SV3 and SV4, the purge of the power supply/photometer housing 24 and the cell and lamp housings 23 and 25. Solenoid valves SV3 and SV4 control the pneumatic pressure to valve actuators VA3 and VA4, respectively.

A second pressure regulator PR2 which reduces $CO_2$ pressure to 20 psig is an input to the current to pneumatic (I/P) transducer used to convert the signal from controller 12 to a pneumatic signal to actuate water control valve 11 which typically is a Research Control Valve made by Badger Meter,Inc. Tulsa Oklahoma Model No. 1002GCN36SVOPCLN36.

$CO_2$ is fed through flow indicator FI2, to purge the power supply/photometer housing 24. The cell and lamp housings 23 and 25 are purged with $CO_2$ through flow indicator FI3. Flow indicators FI2 and FI3 typically are rotameters. $CO_2$ exits the power

supply photometer housing 24 and the cell and lamp housings 23 and 25 through an outlet 26 in the lamp housing 23. The housings are not independently sealed and gas can flow through the housings.

The photometric analyzer is comprised of units 14, 23, 24 and 25 and the basic operation thereof is described in the aforementioned US Patent 4,380,586. The analyzer is a split beam photometric analyzer that uses a metallic discharge mercury vapor lamp, typically a A4/U.V. lamp. The split beam configuration compensates for evolution of small gas bubbles in the sample cell. The reference filter used is a 578 nm (nanometers) filter.

The following are typical filters are used for beverage samples:

436 nm for beverages that use caramel colored syrup such as "Diet Coke", "Pepsi Light", "Dr. Pepper", root beer, cream soda and the like;

265 nm for beverages such as "7 Up" and "Sprite" and the like:

289 nm for beverages such as "Regular Slice", "Diet Slice" and gingerale:

313 nm for beverages such as "Apple Slice", "Mellow Yellow", grape and lemon lime.

For an initial calibration of a given beverage, a standard is prepared with the syrup that is used to prepare the beverage at a desired concentration, and this value is fed and stored in the analyzer controller 28 of the photometric analyzer. The analyzer controller typically is a microprocessor. At the start of a filling run of a given beverage, a sample is collected from the cell and analyzed by a laboratory for syrup content. Based on this laboratory analysis, the calibration of the photometric analyzer is adjusted slightly, typically less than 1% of the preset standard, to match the laboratory analysis. Variations of calibration may result from small changes in syrup flavoring.

An optional method for initially calibrating the photometric analyzer is to use a second cell with a light path length of about 0.15 cm in series with the first cell. The second cell is flushed with water during normal operation and the first cell is flushed with water during the calibration of the photometric analyzer. The second cell after being flushed with water and filled with undiluted syrup is then measured. A calibration is established directly from the syrup reading by extrapolation to the desired beverage level of diluted syrup.

The mercury lamp of the photometric analyzer provides a line source of highly monochromatic and unchanging wavelengths (lines) of U.V. and visible radiation that is highly linear (with Beer's Law) and results in precise readings even at high absorbance levels. Therefore, the photometric analyzer gives a precise analysis, and small differences such as 0.1% can be determined, and the syrup content of the beverage can be controlled to within about 0.25-0.50% of a given standard which has been demonstrated on a beverage filling line.

Both the analyzer controller 28 and the process controller 12 have digital readouts so that results can be read directly. Results also can be fed to a recorder and recorded.

The improved process and apparatus of the invention make it possible to precisely control the content of beverages in particular, carbonated sugar-free beverages. With slight modifications in the equipment such as a measuring filter changes, the process and apparatus may be used for controlling the contents of other liquids or beverages.

## Claims

1. A process for making beverages in which water (3) is mixed with a syrup (17) and filled into containers in a filling line, comprising:

a. removing a sample of beverage before the beverage is filled into containers and then passing the sample of beverage into a cell (14) of a photometric analyzer (13) and photometrically measuring the concentration of syrup in the sample which generates a signal;

b. feeding the signal to a process controller (12) which compares the signal to a signal generated by the photometric analyzer of an analysis of a sample of a standard beverage containing a predetermined level of syrup concentration and precisely determining the deviation of syrup concentration of the sample from the standard;

c. adding a trim amount of water to the beverage to control the syrup concentration of the beverage to the concentration level of the standard;

d. passing the beverage through a mixer (27) to provide thorough mixing of the beverage.

2. A process according to claim 1 in which the syrup-water mixture is carbonated to produce a carbonated beverage.

3. A process according to claim 2 in which the process controller (12) monitors and controls the amount of water added to the syrup before the beverage is carbonated.

4. A process according to claim 1, 2 or 3 in which the beverage is passed through a chiller unit (10) before the beverage is measured for syrup concentration.

5. A process according to any one of claims 1 to 4 in which the process controller (12) is programmable.

6. A process according to any one of claims 1 to 6 in which the syrup content of the beverage is controlled within about 0.25-0.50% of the concentration of the standard beverage.

7. A process according to any one of claims 1 to 6 in which the housing in which the photometric analyzer (13) is positioned is purged with carbon dioxide.

8. A process according to any one of claims 1 to 7 in which valving means are attached to the cell (14) to allow a sample to enter the cell and exit the cell.

9. A process according to claim 8 in which the valving means are flushed with water to prevent contamination of the beverage.

10. A process according to claim 8 or 9 in which the valving means are pneumatically actuated ball valves actuated by carbon dioxide gas.

11. A process according to any one of claims 1 to 10 in which the mixer (27) is a static-in-line mixer.

12. A beverage analyzer and controller for use with a beverage mixing and container filling line which comprises:

a. a photometric analyzer (13), containing a sanitizable sample cell (14) which photometrically analyzes the syrup content of a beverage sample in the cell (14) by comparing the absorbance at the sample wave length to that of a reference wave length and generates a signal;

b. a process controller (12) which receives the signal from the photometric analyzer (13) and compares the signal to a signal generated by the photometric analyzer (13) of an analysis of a sample standard beverage containing a predetermined level of syrup concentration and precisely determines the deviation oof syrup concentration of the sample from the standard;

c. means (11) for adding a trim amount of water to the beverage to control the syrup concentraion of the beverage to the concentration level of the standard beverage; and

d. a mixing means (27) for thoroughly mixing the beverage before analyzing and filling into containers.

13. A beverage analyzer and controller according to claim 12 in which the photometric analyzer (12) is a split beam photometric analyzer having a UV metallic discharge mercury vapor lamp.

14. A beverage analyzer and controller according to claim 12 or 13 which uses a reference filter of 578 nm (nanometers) and sample filters of 436 nm, 265 nm, 289 nm and 313 nm.

15. A beverage analyzer and controller according to claim 12, 13 or 14 having a sanitizable sample cell (13) with quartz windows and an absence of dead volume.

16. A beverage analyzer and controller according to any one of claims 12 to 15 in which the mixing means (27) is a static-in-line mixer.

17. A beverage analyzer and controller according to any one of claims 12 to 16 in which the process controller (17) is programmable for a wide variety of beverages.

Fig. 1

TO FILLING
MACHINE

Fig. 2